# EUROPEAN PATENT APPLICATION

(11) **EP 3 094 053 A1**
(43) Date of publication of application: **16.11.2016**
(21) Application number: 16168577.1
(22) Date of filing: 06.05.2016
(51) Int. Cl.: H04L 12/833, H04L 12/851

(54) **PREDICTIVE EGRESS PACKET CLASSIFICATION FOR QUALITY OF SERVICE**

(30) Priority: 14.05.2015 US 201514711947
(71) Applicant: Cisco Technology, Inc., San Jose, CA 95134-1706 (US)
(72) Inventor: VENKATARAMANAN, Gautam, San Jose, CA 95131 (US); SRINIVASAN, Arun, K 560037 Bangalore (IN); SRINIVASAN, Vijay, Santa Clara, CA 95054 (US); SHAH, Jay, Morgan Hill, CA 95037 (US)
(74) Representative: Clark, Jane Anne

(57) **Abstract**

A system, computer-readable media, and methods for classifying a quality of service for egress packets in a network are disclosed. The method may include receiving a packet and determining an ingress quality of service context for the packet. The method may also include determining an egress quality of service context for the packet. Further, the method may include classifying an egress quality of service for the packet based on the ingress quality of service context and the egress quality of service context. The method may also include rewriting one or more fields in the packet after classifying the egress quality of service and transmitting the packet based on the classified egress quality of service.

## Description

### TECHNICAL FIELD

The present disclosure relates generally to network transmissions and classifying packets to provide egress quality of service.

### BACKGROUND

Network components send and receive packets having differing priorities. For example, a service provider may provide internet access to both individuals and businesses. Businesses pay a higher price or request more reliable data transmissions to ensure that corporate data is transmitted in a timely fashion. One particular example involves voice over internet protocol (VoIP) data packets that must be delivered in a timely fashion to ensure voice quality during a telephone call. Whereas VoIP data needs to be quickly received, processed, and retransmitted for delivery to a recipient, other types of packets can experience delays without impacting the end-user's perception of network connectivity.

Quality of service involves assigning priorities to packets and handling the packets in an appropriate fashion. Quality of service can be judged with a variety of network delivery parameters, such as the amount of time it takes to deliver a packet, the delay between a series of packets, and the loss of any packets that were transmitted but not received. Quality of service classification can be implemented for incoming packets and outgoing packets. Incoming packets, whether to a particular network component or a network service provider, will be referred to as ingress packets, and outgoing packets will be referred to as egress packets.

A service provider rewrites packet headers as part of network routing functions to update address information. The packet can be examined with the rewritten values and the quality of service can be determined based on those values. As a result, egress quality of service implementation occurs after a packet has been received, rewritten as needed, and prepared for transmission. Egress packet rewrite processing, however, requires extensive computational resources and many memory accesses. Moreover, the egress packet rewrite stage serves as a point of congestion due to aggregation of data flows from multiple ingress interfaces and replication of data flows within the network. This congestion is complicated by waiting until after packet rewrite to determine the egress quality of service classification by examining values in the rewritten packet.

The present disclosure therefore classifies packets for egress quality of service before rewriting a packet for transmission.

Aspects and examples of the present invention are set out in the appended claims.

### BRIEF DESCRIPTION OF THE DRAWINGS

FIG. 1 illustrates a system diagram of an example network environment.
FIG. 2 illustrates an exemplary flowchart for processing a packet.
FIG. 3 illustrates a flowchart of exemplary packet rewrite stages.
FIG. 4 illustrates a table of examples of packet handling and quality of service classification.
FIG. 5 illustrates a system diagram of an exemplary network component.

Like reference numbers and designations in the various drawings indicate like elements.

### DESCRIPTION OF EXAMPLE EMBODIMENTS

### Overview

In accordance with one aspect, the present disclosure is directed to a system, computer-readable media, and methods for classifying an egress quality of service for network packets. The method includes receiving a packet and determining an ingress quality of service context for the packet. The method can also include determining an egress quality of service context for the packet. Further, the method can include classifying an egress quality of service for the packet based on the ingress quality of service context and the egress quality of service context. The method can also include rewriting one or more fields in the packet after classifying the egress quality of service and transmitting the packet based on the classified egress quality of service.

The disclosure also relates to a system including, for example, a first network interface configured to receive a packet. The system can also include a processor configured to determine an ingress quality of service context for the packet and determine an egress quality of service context for the packet. The processor can also classify an egress quality of service for the packet based on the ingress quality of service context and the egress quality of service context. Further, the processor can rewrite one or more fields in the packet after classifying the egress quality of service. The system can also include a second network interface configured to transmit the packet based on the classified egress quality of service.

Further, the disclosure relates to a computer-readable medium comprising instructions which, when executed by a processor, perform a method comprising receiving a packet and determining an ingress quality of service context for the packet. The computer-readable medium can also include instructions that, when executed, determine an egress quality of service context for the packet. Further, the computer-readable medium can include instructions to classify an egress quality of service for the packet based on the ingress quality of service context and the egress quality of service context. The computer-readable method can also include instructions that, when executed, rewrites one or more fields in the packet after classifying the egress quality of service and transmits the packet based on the classified egress quality of service.

### Example Embodiments

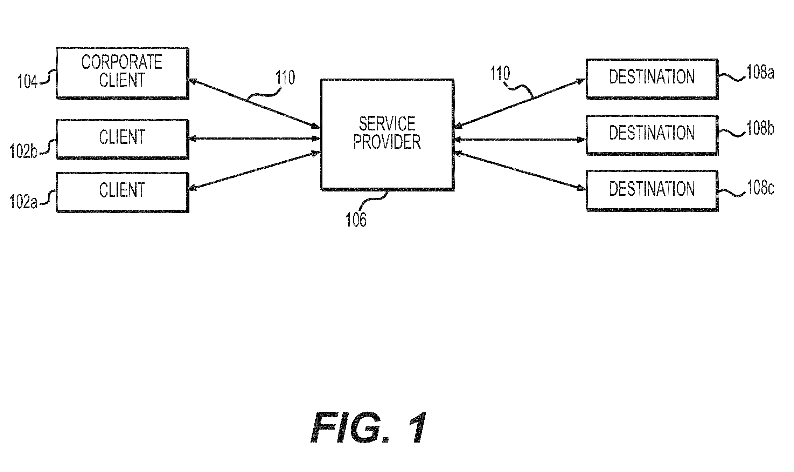

Fig. 1 illustrates a system diagram of an example network environment. The clients 102a-b can be, for example, individual clients such as a personal computer, a smartphone, or an IP phone. The corporate client 104 can represent a business entity and can include its own local area network, switches, routers, personal computers, smartphone devices, IP phones, and other network devices. The clients 102a-b and 104 can connect to the internet, other networks, and other areas of a local area network using a service provider 106.

The service provider 106 can include a plurality of network switches, routers, and other network components to receive and route data transmitted from the clients 102a-b, 104 to the destination devices 108a-c. The destination devices 108a-c can be any form of computer, smart phone, or can be an additional service provider, local area network, or wide area network.

The network connections 110 can be any form of network connection, such as wired or wireless connections, and can transmit data using a variety of different protocols including, for example, Ethernet, internet protocol, UDP, and others. The clients 102a-b and 104 can transmit packets through service provider 106 to destinations 108a-c. The service provider 106 can receive the packets, process the packets based on an ingress quality of service policy, determine the egress quality of service, queue the packets and schedule their delivery, and rewrite packets as needed prior to transmission. As a result, the service provider 106, or any other network component or entity implementing quality of service techniques, can perform multi-parameter egress quality of service classification without an egress packet parser prior to egress packet rewriting.

The quality of service for an incoming packet can be derived by examining information within the packet. The information can include, for example, the sender of the packet, the recipient of the packet, the type of data sent by the packet, and the network transmission protocol for the packet. Data transmission protocols also specify particular fields relating to quality of service, such as the class of service field employed for Ethernet frames, the IP precedence and differentiated services code point (DSCP) fields for IP packets, and EXP bits for a Multiprotocol Label Switching (MPLS) frames. Egress quality of service can be based on the information within the packet, policies of the network component handling the packet, predictions of the values that will be rewritten into a packet before egress based on the policies of the network component, and the current congestion of the network component. For example, a service provider can rewrite certain values in an incoming packet when the packet originates from a business that must receive a higher quality of service.

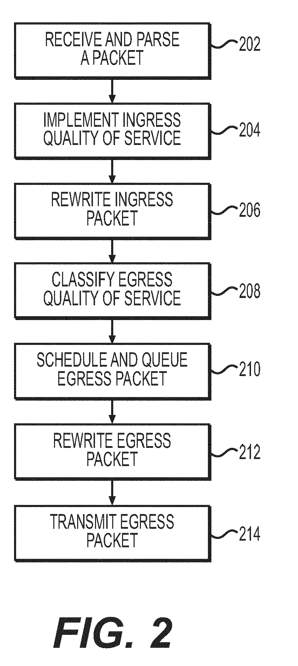

Fig. 2 illustrates an exemplary flowchart for processing a packet. The flowchart illustrates that the egress quality of service can be classified prior to egress packet rewrite. The classification can be based on the predicted packet rewrite so that an egress packet can be handled with an appropriate quality of service. The predicted packet rewrite can be estimated using metadata and ingress packet parsing, as described in more detail below. The quality of service classification can determine the appropriate scheduling and queuing for a packet to meet the service level agreement established for a particular client. For example, the egress queue and bandwidth can be limited, which can lead to congestion. The decision to prioritize and drop certain packets can be done through egress quality of service classification.

As illustrated at step 202, a packet can be received and parsed to identify fields within the packet that are relevant to quality of service and routing. Examples include the class of service, VLAN identifier, and differentiated services code point fields. A VLAN can be a group of end stations with a common set of requirements independent of physical location. A VLAN identifier can identify a particular customer of a service provider. The differentiated signal code point field can classify a packet into a class, such as one class among sixty-four possible classes. These classes can be used to determine the manner in which packets are handled, with preference being given to higher priority packets. Similar classification fields exist with the type of service field in earlier versions of IP protocols, and with EXP bits for a Multiprotocol Label Switching (MPLS) frames. These other classification fields, and others, can also be used at step 202.

Next, ingress quality of service can be implemented at step 204. The ingress quality of service can ensure that packets requesting a higher quality of service are processed with priority and efficiency. For example, VoIP packets or streaming video applications can require a higher quality of service to provide uninterrupted audio and video streams. By comparison, a data transmission providing an e-mail or other non-streaming communication can require a lower quality of service. Ingress quality of service can also be based on, for example, class of service information, a type of IP service, a VLAN priority (e.g., through the priority code point field), and other criteria derived from incoming packets. Memory, such as ternary content addressable memory (TCAM), can store a lookup table so that the data derived from ingress packets can be matched to an appropriate ingress quality of service. While an exemplary embodiment has been provided with ingress quality of service, packets can also be processed without ingress quality of service considerations.

At step 206, ingress packet rewrite can occur. For example, an incoming packet can include a VLAN identifier that should be popped or removed from the packet header. Different networks, or different portions of a network, can use different VLAN identifiers to identify traffic originating from or destined to a particular portion of the network. The VLAN identifier represents a segment of the LAN that the packet belongs to. As a result, the VLAN identifier can be changed during transmission, such as from a value of two to a value of three, or to a value of three, four. VLAN identifiers can include a plurality of values and the system can analyze, for example, four VLAN identifiers in a packet. In some embodiments, the initial step of removing the VLAN identifier on an ingress packet can occur at step 206, and a new VLAN identifier can be added during egress rewrite as described below.

Next, at step 208, the packet can be classified for its egress quality of service. Step 208 can, in one exemplary embodiment, occur prior to scheduling and queuing the packet for delivery at step 210 and prior to editing or rewriting the egress packet (steps 212, 214). Egress quality of service classification can traditionally occur after egress packet rewrite, so that the fields in an egress packet can simply be read and used for classification. This, however, can cause delays and a bottleneck in the system since classification and scheduling must wait for packet rewrite to complete. In the exemplary method illustrated in Fig. 2, egress quality of service classification can occur based on a scheme to estimate the final rewritten packet fields by using, for example, a combination of metadata from the ingress parser at step 202 and the forwarding stages. This combination of metadata can be available for egress classification. Packets can also be classified based on the type of data and the source or destination addresses. For example, a business customer can have an agreement with a service provider to receive a higher quality of service relative to other customers so that the class for packets associated with that business customer can be increased. In one example, a client can be identified based on their virtual local area network (VLAN) identifier.

Packets that are classified to receive a lower quality of service can be subjected to a rate limiter or reprioritized for transmission. One example of reprioritizing a packet is marking the packet with a different differentiated services code point value, which is a field in an IP header that classifies network traffic and provides quality of service on IP networks. The differentiated services code point value is employed for packets in layer three of the open systems interconnection model. As an example, a service provider can determine that a client sends traffic with a differentiated services code point value of one, but that client is entitled to a higher quality of service based on a lookup of the client in memory using the VLAN identifier value. Accordingly, in this example, the differentiated services code point value can be rewritten to another value, such as five, based on a policy in memory to provide this client with a higher quality of service. For packets in layer two of the open systems interconnection model, quality of service can be based on a class of service field in the VLAN tag header. As another example, quality of service can be based on the EXP field for multiprotocol label switching traffic. In this manner, packets from a particular client can be identified and classified into a priority queue rather than a normal queue. The step of rewriting the differentiated services code value can occur at step 206 or during egress packet rewrite at step 212.

The metadata can include, for example, a variable such as a QOS label to track estimated changes as a result of an egress quality of service rewrite. In one embodiment, the QOS label can be added to a packet as metadata and used to estimate the egress quality of service. The QOS label can include per-hop behavior information, such as the class of service, differentiated services code point value, or EXP value, depending on the type of packet. There can be multiple classes of service, differentiated services code point, and EXP values in a packet, which are referred to as outer and inner values. In one exemplary embodiment, the QOS label can be stored in ternary content addressable memory as ten bits leading to 1,024 combinations per packet. For example, a packet can have a QOS label for both a class of service value and a differentiated services code protocol value.

The metadata can also include an egress context value that estimates the state of the packet after forwarding rewrite. Examples of predicted forwarding edits to a packet include updating VLAN, CVLAN, or SVLAN information. This predictive information can be tracked using an egress context value. In one exemplary embodiment, the egress context value can be stored in ternary content addressable memory as, for example, nine bits, leading to 512 combinations. The values for matching and creating an egress quality of service classification can be allocated, for example, sixty bits in memory.

In one exemplary embodiment, the ingress quality of service classification can also be used to classify egress quality of service. An ingress classification lookup can occur once the packet has been parsed at step 202. The egress quality of service classification (step 208) can consider the egress context metadata, which can be, for example, a function of ingress rewrite and forwarding rewrite, without the fields that can be deleted prior to step 208. In this example, estimations of fields that will be added and deleted are already available to the egress classification process through the egress context metadata.

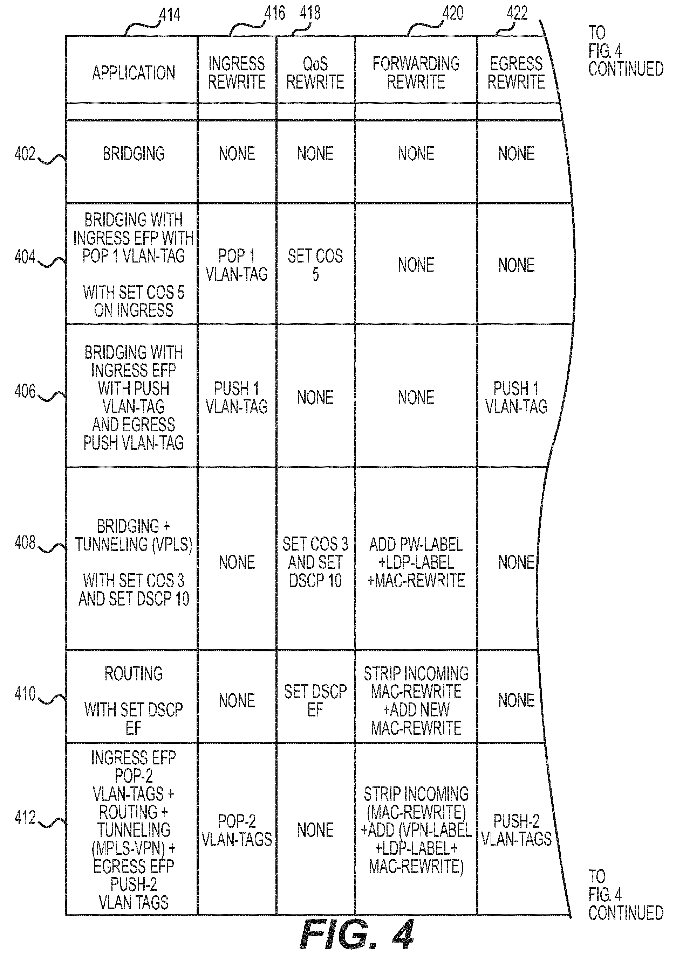

Egress quality of service classification can match classification requirements with the relevant fields in an incoming packet along with the metadata indicating the predicted changes that a packet will undergo during egress rewrite. The predicted values can be based on configured policies for packet handling and forwarding. Service providers can select the appropriate values that will result in particular classifications. For example, a lookup table can be used in memory, such as ternary content addressable memory, that indicates a packet arriving from a particular VLAN will have a quality of service policy that modifies the differentiated services code protocol value. Examples will be described in more detail with reference to Fig. 4 below. In exemplary embodiments, the quality of service tracked using existing values in packets, such as the class of services or differentiated services code protocol, although it will be appreciated that separate quality of service fields can also be used in addition to those previously mentioned.

While examples of information that can be used to determine egress quality of service include the QOS label and egress context information, additional fields can also be used to classify packets and handle the packets with an appropriate quality of service. An example includes the packet size. A configuration policy can determine that larger packets should be given a lower quality of service since larger packets will take longer to process and deliver, leading to system congestion. Alternatively, larger packets can be given preferential treatment to reduce backlogs in queue size. As another example, where Ethernet virtual circuits share a port, quality of service classification can occur as to each virtual circuit. An Ethernet virtual circuit is a layer two bridging architecture in the OSI model for Ethernet service. The Ethernet virtual circuit can include specific ports that are used to create a point to point or multipoint to multipoint path within a service provider network. A system administrator can configure user policies for each virtual circuit to allow flexibility in system design and implementation. The user policies can have different configurations to match values for the particular circuit being used to transmit a packet.

At step 210, the packet can be scheduled and queued based on the egress quality of service. Packets with different quality of service levels can be placed into egress queues with differing priorities. For example, a network component can have more ingress pathways than egress pathways, causing congestion that can lead to dropped packets. Packets with a low quality of service can be dropped prior to dropping packets with a higher quality of service. Packets with a higher quality of service can also be programmed into a priority queue that will be processed faster. A service provider can program a variety of policies for handling packets with different classes of service through a user configuration policy. Additional examples include a weighted anomaly detection policy that can selectively drop packets, a weighted tail drop policy specifying a queue size depending on the appropriate quality of service, and a shaping policy to control the maximum rate at which packets are transmitted out of the interface. As an example, packets with a differentiated services code protocol value of five can be placed in a queue that can hold up to ten-thousand bytes, and packets with a differentiated services code protocol value of ten can be placed in a queue that can hold up to twenty-thousand bytes. These sizes are merely examples to illustrate that packets with differing values can be given preferential treatment relative to each other.

At step 212, the egress packet can be rewritten. Examples include adding or changing a VLAN identifier, class of service or differentiated services code protocol values, or addressing values. A service provider can use the VLAN identifier to determine which customer transmitted a packet and assign an appropriate quality of service. Because the remote site or destination to which a packet is sent can use its own mapping of VLAN identifiers, the VLAN identifier may need to be changed during transmission. Some destination networks or network components also may not support VLAN identifiers, so it may need to be removed from the packet. A service provider can update, add, or remove VLAN identifiers in a packet to maintain the appropriate network associations that identify a packet. As another example, an Ethernet virtual circuit identifier can be modified. Additional examples of rewriting an egress packet will be provided below with reference to Fig. 4. After rewriting a packet, it can be transmitted at step 214.

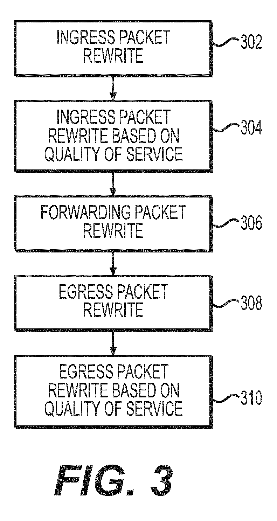

Fig. 3 illustrates a flowchart of exemplary packet rewrite stages. Egress quality of service classification can occur based on fields that were available upon receipt of a packet and read during ingress packet parsing, as well as fields derived during packet processing. The fields that will be used in a packet after egress packet rewrite can be estimated and used to classify the egress quality of service. Examples of parameters that can be used for estimation include knowing which ingress packet fields will be deleted as a result of ingress rewrite in step 302, which packet fields will be added to a packet as a result of ingress rewrite in step 302, which ingress packet fields will be modified as a result of quality of service rewrite in step 304, which ingress packet fields will be deleted as a result of forwarding rewrite in step 306, which additional fields will be added in the packet as a result of forwarding rewrite in step 306, which ingress packet fields will be deleted as a result of egress rewrite in step 308, and which fields will be added in the packet as a result of egress rewrite in step 308. In this example, remaining ingress packet fields may be unchanged after egress packet rewrite.

At step 302, a packet can undergo ingress packet rewrite. For example, a VLAN identifier tag can be removed or added to a packet. At step 304, a packet can undergo ingress packet rewrite based on the ingress quality of service. For example, the class of service field can be rewritten. At step 306, a forwarding packet rewrite can occur as a result of forwarding decisions for a packet. Additional packet fields as a result of forwarding rewrite can be derived from forwarding data-structures and estimated prior to egress classification. The estimation can be provided through the egress context field. For example, a network switch acting as a router can need to update MAC addresses to indicate the next hop during transmission of a packet to the destination.

An egress packet rewrite can occur at step 308 on the egress interface. For example, a VLAN identifier can be added. At step 310, egress packet rewrite can also occur based on the quality of service, such as when a class of service or differentiated services code protocol value is updated. Although illustrated as separate steps, steps 308 and 310 can be a single step.

Fig. 4 illustrates a table of examples of packet handling and quality of service classification. While six examples are provided, other scenarios are possible depending on the network application 414. The examples provided illustrate the formation and propagation of metadata from the ingress to the egress pipeline.

The ingress rewrite column 416 illustrates exemplary ingress rewrite operations other than quality of service based rewrites. For example, a VLAN identifier can be removed. The QoS rewrite column 418 illustrates a rewrite that can occur based on the quality of service to be assigned to a particular client. The forwarding rewrite column 420 illustrates rewrite operations associated with forwarding the packet. For example, when routing, the layer two MAC address can be changed to update the addressing information for the next hop. As a result, an incoming packet may have been destined to the MAC address of the network component that receives the packet. The network component will update the MAC address to be the next network component that the packet will be routed to.

The egress rewrite column 422 illustrates examples of the egress interface adding or changing tags, such as adding a VLAN identifier to a packet. The adjusted ingress classification lookup 424 can indicate an adjusted packet based on which an egress quality of service classification can be determined. An incoming packet can be parsed to identify fields that are relevant to a quality of service classification. In one exemplary embodiment, four VLAN identifier tags can be matched to values stored in memory. However, some fields can change, and the egress quality of service classification can be based on predicted edits to fields rather than the fields in the packet as received. For example, the VLAN identifier can change, so egress quality of service classification should not be based, in this example, on the VLAN identifier that was included in an ingress packet. The adjusted ingress classification in this example would include the ingress packet without the VLAN identifier that will be removed or replaced.

The QOS label column 426 includes metadata that can be carried in a hardware pipeline when processing a header of a packet. The QOS label can include quality of service information associated with handling of the packet. The ingress QOS context column 428 indicates the ingress quality of service context for an incoming packet, and the egress QOS context column 430 indicates examples of egress quality of service context. Ingress quality of service context 428 can be, for example, up to four outer VLAN identifier tags, and the egress quality of service context 430 can be an Ethernet flow point (EFP) identifier. As an example, an egress quality of service policy can be attached on a port that contains a plurality of Ethernet virtual connections. One of the classes in a quality of service policy can classify the Ethernet virtual circuit identifier and the VLAN tags within the Ethernet virtual circuit. The ingress quality of service context can represent the VLAN tag in the incoming packet. The egress quality of service context can represent the Ethernet virtual identifier. Both the ingress quality of service context and the egress quality of service context can be matched in an egress quality of service lookup using, for example, TCAM memory, to identify the Ethernet virtual circuit and VLAN combination which was specified in the quality of service policy.

Egress context column 432 illustrates metadata that carries information indicative of a transformation that has happened or will happen during processing of the packet. The egress context values in column 432 can be the prediction of what will happen during forwarding rewrite as shown in column 420 and described in the examples below. In one exemplary embodiment, the QOS label, ingress context, and egress context metadata can be used to classify egress quality of service.

A first example 402 includes a bridging application to connect multiple network segments. In this example, no rewriting operations (416, 418, 420, 422) will occur, so the ingress classification can occur based on the full incoming packet and no estimated egress context needs to be provided to perform egress quality of service classification. The first example therefore results in simply forwarding a packet.

A second example illustrated at 404 includes bridging with ingress Ethernet flow points (EFP) and removing or popping a VLAN identifier. In this example, the class of service field can also be set to particular value, such as five, by a service provider. Incoming packets from a particular client with a class of service value of 1, 2, or any other value can be rewritten to a defined value, such as 5, that provides an appropriate quality of service for that client. As an example, the service provider can have a lookup table that includes the policies for how packets will be edited based on incoming values to predict the packet rewriting that will happen during the egress stage. In other systems, the rewritten value of five can be read through egress packet parsing to determine egress quality of service, but in one embodiment the egress value may not actually be changed to five until after egress rewrite has occurred. As a result, metadata can be carried with the packet indicating that the value will be rewritten, and the metadata can be used to perform egress quality of service classification prior to egress packet rewrite. However, no estimated forwarding rewrite (418) or egress rewrite (420) will occur in the example shown at 404, so the ingress classification lookup 424 can occur based on the full incoming packet without the popped VLAN identifier. The QOS label metadata 426 in this example will indicate that the packet class of service will be set to five. The quality of service lookup can therefore occur based on the adjusted incoming packet, without the VLAN identifier that will be removed, and based on the QOS label indicating that the class of service will be set to five. Because one VLAN identifier is removed, the ingress quality of service context 424 can be based on, for example, three remaining VLAN identifiers. The egress quality of service context 430 can be an Ethernet flow point identifier.

A third example 406 includes bridging with ingress Ethernet flow point (EFP), adding a VLAN tag on ingress, and adding a VLAN tag on egress. In this example, a packet can arrive without a VLAN identifier and two VLAN identifiers can be added to the packet during processing. The first VLAN identifier can be added on during ingress rewrite as shown in column 416. A second VLAN identifier can be added on egress write, as shown at column 422, after the egress quality of service has been classified. Some destination devices, service providers, or network components require two VLAN identifiers. The first VLAN identifier that is added during ingress rewrite will be available through ingress packet parsing, and predictive metadata will indicate the VLAN identifier that will be added during egress rewrite. In another embodiment, the packet can arrive with one VLAN identifier and one VLAN identifier can be added during egress rewrite. The ingress quality of service context 428 will therefore be the added VLAN identifier along with, in one embodiment, up to three additional VLAN identifiers.

As another example illustrated at 408, bridging and tunneling through a virtual private LAN service (VPLS) can set the class of service to three and differentiated services code point to ten through a quality of service rewrite at 418. The forwarding rewrite in this example can add a pseudowire (PW) label, label distribution protocol (LDP) label, and MAC rewrite to forward packets to a MPLS-enabled network. A pseudowire may be an emulation of a point-to-point connection over a packet-switching network. In some uses, a pseudowire can be used for creating layer two or layer three MPLS virtual private networks for different customers through a service provider network.

The example illustrated at 408 can also set the class of service to a value of three and differentiated services code protocol to a value of ten. The QOS label metadata 426 therefore will reflect that the class of service and differentiated services code protocol values will be changed during the egress rewrite. Metadata for the QOS label can be created and used for egress quality of service estimation indicating that the class of service will be set to three and the differentiated services code can be set to ten. The predicted values can be determined by reading the ingress packet values and looking up those packet values in memory to determine what policies will be applied to rewrite the packet upon egress.

In addition, the egress context metadata 432 can indicate the predicted forwarding rewrite values, including additional of a PW label, LDP label, and MAC rewrite. The ingress quality of service context 428 for pseudowire imposition can be unused, but for pseudowire disposition can represent the combination of customer VLAN identifiers in the inner pseudowire payload. Imposition can be the task of adding pseudowire encapsulations to a packet while entering a MPLS VPN cloud. Disposition can be the task of removing pseudowire encapsulations from a packet while existing a MPLS VPN cloud.

The egress quality of service context can be the Ethernet flow point identifier or egress bridge domain interface (BDI) identifier. The bridge domain interface provides layer three routing of traffic received where an IP address is configured on a layer two bridge-domain, such as a VLAN.

Where multiple QOS labels are used, such as in example 408 with using both a class of service value and a differentiated services code point value, the policies for both QOS labels can be merged to provide an appropriate egress quality of service. For example, a memory lookup of a class of service value of five can indicate that the packet should be scheduled in a first queue for delivery through a first port. However, a memory lookup of the differentiated services code point value of ten can indicate the packet be processed through a different queue and/or port. The service provider can program a network switch to merge the two policies, so that a queue and port can be selected based on a plurality of QOS labels.

A fifth example includes routing, as shown at 410, while setting the differentiated services code point to indicate expedited forwarding (EF). In this example, the differentiated services code field will be updated to indicate to the next hop in network routing that the packet should receive preferential treatment downstream. The forwarding rewrite operation can include removing the incoming MAC value and adding a new MAC value to update routing information. QOS label metadata 426 can indicate that the differentiated services point will be set to indicate expedited forwarding and the egress context metadata 432 will signify the MAC rewrite. The egress quality of service context 430 can be the Ethernet flow point identifier or egress bridge domain interface (BDI) identifier. In other embodiments, the egress quality of service context 430 can represent the next hop MAC address or destination IP address, or any other field, including addressing fields.

Another example 412 includes ingress Ethernet flow point (EFP) packets where two VLAN identifier tags can be removed or popped during the ingress rewrite processing. This example can involve routing and tunneling in a MPLS VPN. The packet can arrive with two VLAN identifier tags, which can be removed, and then a forwarding rewrite will occur for routing by removing the existing MAC, adding the MAC for the next hop, and including MPLS encapsulation using a VPN label and LDP label. Ingress rewrite 416 in this example includes removing two VLAN identifier tags. The forwarding rewrite 420 includes removing the incoming MAC address and rewriting it, and adding a VPN-label, LDP label, and performing a MAC rewrite. Correspondingly, egress context values 432 will include metadata indicating that the forwarding rewrite will occur to allow egress quality of service classification to occur based on the predicted values in a packet after egress rewrite. As illustrated in column 422, two VLAN identifier tags can be added during egress rewrite in this example. The ingress classification lookup 424 can therefore be based on the incoming packet without the VLAN-tags and MAC, which will be rewritten. The egress quality of service context 430 can be the Ethernet flow point identifier or egress bridge domain interface (BDI) identifier.

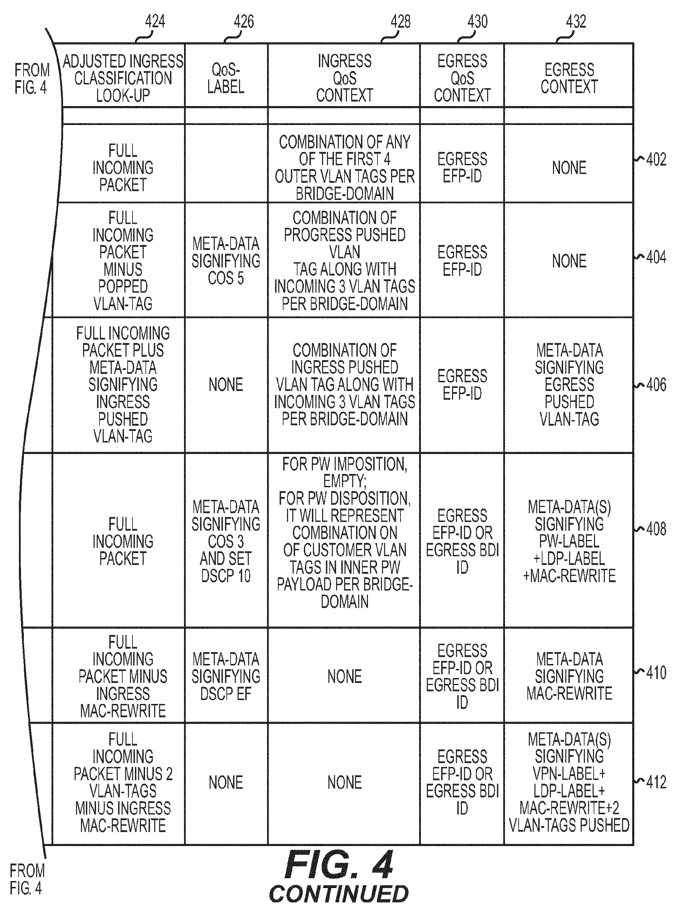

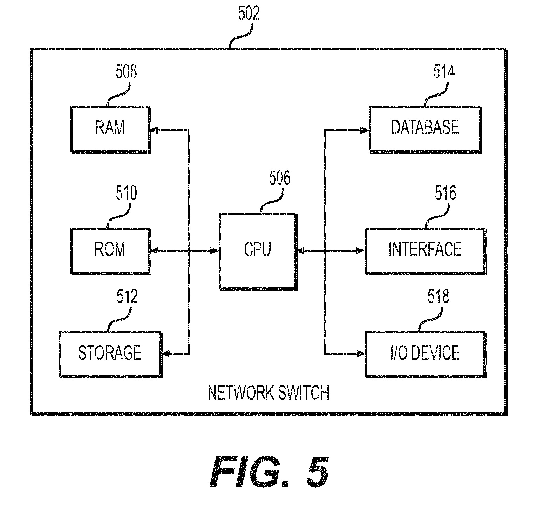

Fig. 5 illustrates a system diagram of a network component. The system components illustrated in Fig. 5 can be included in the network components of the system, such as a network switch. Multiple switches can be used within a network to transmit packets. Network switch 502 can have visibility into data transmissions because it will be transmitting packets within, from, and to networks.

Network switch 502 can include one or more hardware components such as, a central processing unit (CPU) or microprocessor 506, a random access memory (RAM) module 508, a read-only memory (ROM) module 510, a memory or data storage module 512, a database 514, an interface 516, and one or more input/output (I/O) devices 518. Alternatively and/or additionally, network switch 502 can include one or more software media components such as, for example, a computer-readable medium including computer-executable instructions for performing methods consistent with certain disclosed embodiments. It is contemplated that one or more of the hardware components listed above can be implemented using software. For example, storage 512 can include a software partition associated with one or more other hardware components.

CPU 506 can include one or more processors, each configured to execute instructions and process data to perform one or more functions. CPU 506 can be communicatively coupled to RAM 508, ROM 510, storage 512, database 514, interface 516, and I/O devices 518. CPU 506 can be configured to execute sequences of computer program instructions to perform various processes, which will be described in detail below. The computer program instructions can be loaded into RAM 508 for execution by CPU 506.

RAM 508 and ROM 510 can each include one or more devices for storing information associated with device operation. For example, ROM 510 can include a memory device configured to storing routing and forwarding information. RAM 508 can include a memory device for storing data associated with one or more operations of CPU 506 or interface 516. For example, ROM 510 can load instructions into RAM 508 for execution by CPU 506.

Storage 512 can include any type storage device configured to store information that CPU 506 can need to perform processes consistent with the disclosed embodiments. For example, storage 512 can include one or more magnetic and/or optical disk devices, such as hard drives, CD-ROMs, DVD-ROMs, or any other type of mass media device. Alternatively or additionally, storage 512 can include flash memory mass media storage or other semiconductor-based storage medium. In one example, storage 512 can be ternary content-addressable memory (TCAM) to store, for example, routing and forwarding information including MAC and IP addresses. Storage 512 can also include a lookup table and values to store the policies of the network component, including how packets will be rewritten based on VLAN, class of service, differentiated code point, EXP, and other values, that can be used to predict the values that will be rewritten into a packet upon egress.

Database 514 can include one or more software and/or hardware components that cooperate to store, organize, sort, filter, and/or arrange data. CPU 506 can access the information stored in database 514 to maintain and determine the network topology. Database 514 can store additional and/or different information than that listed above.

Interface 516 can include one or more components configured to transmit and receive data via a communication network 520, which can be the Internet, a local area network, a workstation peer-to-peer network, a direct link network, a wireless network, or any other suitable communication platform. For example, interface 516 can include one or more modulators, demodulators, multiplexers, demultiplexers, network communication devices, wireless devices, antennas, modems, and any other type of device configured to enable data communication via a communication network. According to one embodiment, interface 516 can be coupled to or include wireless communication devices, such as a module or modules configured to transmit information wirelessly using Wi-Fi or Bluetooth wireless protocols. Although illustrated as a single interface 516, multiple interfaces can be included. For example, network component 502 can be a switch, and interface 516 can include numerous connections and ports to route network traffic.

I/O devices 518 can include one or more components configured to communicate information with a component or user associated. I/O devices 518 can include a console with an integrated keyboard and mouse to allow user input. I/O devices 518 can also include peripheral devices such as, for example, a printer, a user-accessible disk drive (e.g., a USB port, a floppy, CD-ROM, or DVD-ROM drive, etc.) to allow a user to input data stored on a portable media device, a microphone, a speaker system, or any other suitable type of interface device. For example, an I/O device 518 can include a user interface for a network administrator to configure and maintain the network.

It should be understood that the various techniques described herein can be implemented in connection with hardware or software or, where appropriate, with a combination thereof. Thus, the methods and apparatuses of the presently disclosed subject matter, or certain aspects or portions thereof, can take the form of program code (i.e., instructions) embodied in tangible media, such as floppy diskettes, CD-ROMs, hard drives, or any other machine-readable storage medium wherein, when the program code is loaded into and executed by a machine, such as a computing device, the machine becomes an apparatus for practicing the presently disclosed subject matter. In the case of program code execution on programmable computers, the computing device generally includes a processor, a storage medium readable by the processor (including volatile and non-volatile memory and/or storage elements), at least one input device, and at least one output device. One or more programs can implement or utilize the processes described in connection with the presently disclosed subject matter, e.g., through the use of an application programming interface (API), reusable controls, or the like. Such programs can be implemented in a high level procedural or object-oriented programming language to communicate with a computer system. However, the program(s) can be implemented in assembly or machine language, if desired. In any case, the language can be a compiled or interpreted language and it can be combined with hardware implementations.

While this specification contains many specific implementation details, these should not be construed as limitations on the claims. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.
A system, computer-readable media, and methods for classifying a quality of service for egress packets in a network are disclosed. The method may include receiving a packet and determining an ingress quality of service context for the packet. The method may also include determining an egress quality of service context for the packet. Further, the method may include classifying an egress quality of service for the packet based on the ingress quality of service context and the egress quality of service context. The method may also include rewriting one or more fields in the packet after classifying the egress quality of service and transmitting the packet based on the classified egress quality of service.

It should be appreciated that the logical operations described herein with respect to the various figures may be implemented (1) as a sequence of computer implemented acts or program modules (i.e., software) running on a computing device, (2) as interconnected machine logic circuits or circuit modules (i.e., hardware) within the computing device and/or (3) a combination of software and hardware of the computing device. Thus, the logical operations discussed herein are not limited to any specific combination of hardware and software. The implementation is a matter of choice dependent on the performance and other requirements of the computing device. Accordingly, the logical operations described herein are referred to variously as operations, structural devices, acts, or modules. These operations, structural devices, acts and modules may be implemented in software, in firmware, in special purpose digital logic, and any combination thereof. It should also be appreciated that more or fewer operations may be performed than shown in the figures and described herein. These operations may also be performed in a different order than those described herein.

## Claims

1. A method, comprising:
receiving a packet;
determining an ingress quality of service context for the packet;
determining an egress quality of service context for the packet;
classifying an egress quality of service for the packet based on the ingress quality of service context and the egress quality of service context;
rewriting one or more fields in the packet after classifying the egress quality of service; and
transmitting the packet based on the classified egress quality of service.

2. The method of claim 1, wherein the egress quality of service context indicates an Ethernet flow point virtual circuit, and the method further comprises:
determining the egress quality of service and classifying the egress quality of service separately for at least two Ethernet flow point virtual circuits that share a port.

3. The method of claim 1 or 2, further comprising classifying the egress quality of service based on up to four virtual local area network identifiers.

4. The method of claim 1, 2 or 3 further comprising:
parsing the received packet;
predicting one or more values that will be rewritten within the packet based on a packet handling policy; and
classifying the egress quality of service based on the predicted values.

5. The method of any preceding claim, further comprising:
determining a type of network traffic carried by the packet; and
classifying the egress quality of service based on the type of traffic.

6. The method of any preceding claim, wherein the ingress quality of service context comprises a plurality of virtual local area network identifiers.

7. The method of any preceding claim, wherein the egress quality of service context comprises an Ethernet virtual circuit identifier.

8. A system comprising:
a first network interface configured to receive a packet;
a processor configured to:
determine an ingress quality of service context for the packet;
determine an egress quality of service context for the packet;
classify an egress quality of service for the packet based on the ingress quality of service context and the egress quality of service context; and
rewrite one or more fields in the packet after classifying the egress quality of service; and
a second network interface configured to transmit the packet based on the classified egress quality of service.

9. The system of claim 8, wherein:
the egress quality of service context indicates an Ethernet flow point virtual circuit formed between the first network interface and the second network interface, and
the processor is further configured to determine the egress quality of service and classify the egress quality of service separately for at least two Ethernet flow point virtual circuits that share a first port on the first network interface and a second port on the second network interface.

10. The system of claim 8 or 9, wherein the processor is further configured to classify the egress quality of service based on up to four virtual local area network identifiers.

11. The system of claim 8, 9 or 10 wherein the processor is further configured to:
parse the received packet to obtain one or more ingress values;
access ternanry content addressable memory to identify, based on the one or more ingress values, one or more predicted egress values that will be written into an egress packet before transmission; and
classify the egress quality of service based on the one or more predicted egress values.

12. The system of claim 8, 9, 10 or 11 wherein the ingress quality of service context comprises a plurality of virtual local area network identifier tags.

13. The system of claim 8, 9, 10, 11 or 12 wherein the egress quality of service context comprises an Ethernet virtual circuit identifier.

14. A computer-readable medium comprising instructions which, when executed by a processor, perform a method according to any of claims 1 to 7.
